# FASCICULE DE BREVET EUROPEEN

(11) **EP 1 664 607 B1**
(45) Date de publication et mention de la délivrance du brevet: **04.02.2009**
(21) Numéro de dépôt: 04787284.1
(22) Date de dépôt: 01.09.2004
(51) Int. Cl.: F16L 7/00

(54) **DISPOSITIF D'ESPACEMENT ET DE CENTRAGE PERFECTIONNE POUR CONDUITE RIGIDE A DOUBLE ENVELOPPE A FAIBLE COEFFICIENT DE TRANSFERT THERMIQUE**
VERBESSERTE BEABSTANDUNGS- UND ZENTRIERVORRICHTUNG FÜR EINEN STARREN DOPPELWANDIGEN KANAL MIT NIEDRIGEM WÄRMEÜBERTRAGUNGSKOEFFIZIENTEN
IMPROVED SPACING AND CENTRING DEVICE FOR A RIGID DOUBLE-WALL DUCT WITH A LOW HEAT TRANSFER COEFFICIENT

(30) Priorité: 08.09.2003 FR 0310563
(43) Date de publication de la demande: 07.06.2006
(73) Titulaire: Technip France, 92400 Courbevoie (FR)
(72) Inventeur: HOFFMANN, Philippe, F-75017 Paris (FR)
(74) Mandataire: Bertrand, Didier
(86) Numéro de dépôt international: PCT/FR2004/002229
(87) Numéro de publication internationale: WO 2005/028938

(56) Documents cités:
- GB-A- 2 370 870
- US-A- 5 156 895
- US-A- 5 743 302
- US-A- 6 015 015
- US-B2- 6 562 401

## Description

La présente invention se rapporte à un dispositif d'espacement et de centrage, notamment pour les conduites rigides à double enveloppe destinées au transport des hydrocarbures.

Les conduites rigides de ce type comprennent deux tubes coaxiaux, un tube rigide externe (carrier pipe, en langue anglaise) et un tube rigide interne (flowline, en langue anglaise), séparés par un espace annulaire, ledit dispositif d'espacement et de centrage, ou dispositif d'entretoisement, étant logé dans ledit espace annulaire pour maintenir les deux tubes coaxiaux à distance l'un de l'autre.

Ces conduites sont destinées à être installées dans les fonds sous-marins au moyen d'un navire de pose et notamment par une méthode dite technique du « rigide déroulé ».

Les conduites à double enveloppe (pipe-in-pipe, en langue anglaise), sont typiquement utilisées pour les lignes de production sous-marine, en particulier pour le transport des hydrocarbures, et il est nécessaire de les isoler, car les huiles lourdes ont tendance à se solidifier en refroidissant lors de leur transfert du fond vers la surface. L'isolation est également nécessaire pour éviter la formation d'hydrates qui peuvent apparaître quand certains types de pétroles bruts se refroidissent, par exemple lorsque la production est interrompue.

L'isolation thermique est procurée en remplissant l'espace annulaire de la conduite par un matériau à faible conductivité thermique.

Par ailleurs, les conduites à double enveloppe sont réalisées de façon que leur espace annulaire soit sec pour améliorer les performances de l'isolation thermique. L'espace annulaire est aussi susceptible d'être maintenu à pression atmosphérique pour que ledit matériau ne soit soumis ni à la pression hydrostatique que le tube externe subit ni à la pression de l'hydrocarbure qui circule dans la conduite interne. Ainsi, les conduites rigides à double enveloppe permettent d'utiliser une large variété de matériau à faible conductivité thermique fournissant une bonne isolation.

De façon conventionnelle, deux techniques principales sont utilisées pour poser les conduites sous-marines à partir d'un navire de pose : la méthode de pose en J ou en S, (« J-lay » ou « S-lay » en langue anglaise) et la méthode du « rigide déroulé ».

Dans la première technique, la conduite est assemblée sur le navire en soudant bout à bout des longueurs de tube avant d'être posée au fond de la mer. Cette technique est lente, coûteuse et requière une équipe de soudeurs à bord du navire de pose.

La technique du « rigide déroulé » comprend une étape d'assemblage de la conduite à terre et une étape d'enroulage sur une bobine qui est ensuite transportée sur le site de production où elle est déroulée le long de l'emplacement prévu. Cette technique de pose permet de mobiliser le navire de pose durant une période moins longue que pour la méthode de pose en J.

Dans la technique du « rigide déroulé », la conduite rigide est déformée plastiquement lorsqu'elle est enroulée sur la bobine et cette déformation plastique est supprimée par un mécanisme de redressement lorsque la conduite est déroulée. Durant l'enroulage, une tension est appliquée à la conduite pour conformer la conduite externe à la bobine. La conduite externe est ainsi courbée par contact avec la bobine ou avec les couches de conduites déjà enroulées.

Au cours des opérations d'enroulage et de déroulage, les forces de flexion sont transférées du tube externe au tube interne par les entretoises ou les parois annulaires disposées le long de la conduite dans l'espace annulaire. Au cours du déroulage, la conduite est redressée, la conduite externe étant entraînée à travers des moyens de redressement, tels que des rouleaux opposés ou un assemblage de tensionneurs redresseurs (bien connus de l'homme du métier). Les forces de redressement sont appliquées à l'extérieur du tube externe et sont uniquement transférées au tube interne par l'intermédiaire des dispositifs d'espacement et de centrage.

La répartition de ces dispositifs étant discrète le long de la conduite à double enveloppe, le redressement du tube interne s'effectue localement et il n'est donc pas complet. Ainsi, le tube interne présente des courbures résiduelles après le redressement qui dépendent de l'espacement des entretoises dans l'espace annulaire. Le déplacement relatif du tube interne dans le tube externe qui en découle, a pour conséquence des réductions locales de l'espace annulaire présent entre les deux tubes, conduisant à une compression potentielle du matériau à faible conductivité thermique qui isole la conduite.

Avec l'application des techniques du « rigide déroulé » aux conduites double enveloppe, des longueurs continues de matériau isolant doivent être séparées par des entretoises et l'espacement des entretoises doit être suffisamment petit pour pouvoir transmettre les forces de flexion, du tube externe au tube interne et pour éviter les réductions locales de l'espace annulaire entre les deux tubes.

Lorsque l'isolant thermique est du type en demi-coquille, la compression locale du matériau isolant conduit à une réduction des propriétés isolantes et globalement à une réduction des propriétés isolantes de la conduite. Afin de pallier cette perte, il est nécessaire d'ajouter des entretoises et de les rapprocher les unes des autres pour empêcher la compression du matériau isolant.

Toutefois, ajouter des entretoises supplémentaires dont la capacité d'isolation thermique est faible par rapport aux matériaux isolants utilisés, réduit nécessairement la quantité totale d'isolant thermique et en conséquence, l'isolation thermique de la conduite.

On pourra aussi se référer au document US 5743202 décrivant une conduite à double enveloppe équipée d'un dispositif d'espacement et de centrage.

On peut également modifier la forme de la conduite en augmentant le diamètre du tube externe et/ou en réduisant le diamètre du tube interne de façon à pouvoir augmenter les quantités de matériau isolant. Mais une telle solution engendre d'autres problèmes et notamment celui de modifier les diamètres des tubes standards usuels, ce qui augmente les coûts et/ou réduit les capacités de la conduite.

Un objet de la présente invention est alors de fournir une conduite rigide à double enveloppe présentant des propriétés d'isolation accrues et qui soit susceptible d'être enroulée et déroulée lors de la pose par les techniques de redressements usuels.

Dans ce but, selon un premier objet, la présente invention propose un dispositif d'espacement et de centrage pour conduite rigide à double enveloppe de type enroulable, destinée au transport des hydrocarbures, ladite conduite rigide comprenant deux tubes coaxiaux séparés par un espace annulaire, ledit dispositif d'espacement et de centrage étant logé dans ledit espace annulaire pour maintenir les deux tubes coaxiaux à distance l'un de l'autre ; ledit dispositif d'espacement et de centrage comportant un élément en matière à faible conductivité thermique constituée d'un aérogel, ledit élément étant recouvert au moins partiellement d'une enveloppe en matériau plastique de type polymère.

Ainsi, une caractéristique de l'invention réside dans l'utilisation d'aérogel pour former le dispositif d'espacement et de centrage ; la conductivité thermique de l'aérogel étant faible et par exemple inférieure à 0,1 W/mK.

De la sorte, non seulement ledit élément est thermiquement isolant mais en plus, sa résistance mécanique, et notamment sa résistance à la compression, par exemple supérieure à 10 M.Pa, est telle que les propriétés mécaniques globales dudit dispositif d'espacement et de centrage sont comparables aux entretoises décrites dans l'art antérieur.

De la sorte, le gain d'isolation global de la conduite, par rapport à une conduite conforme à l'art antérieur où les dispositifs d'espacement et de centrage sont constitués d'une pièce en matière plastique, par exemple en polyamide, est de l'ordre de 15 à 20%.

En outre, lors de la réalisation de la conduite durant laquelle on insère par exemple 1 km de conduite interne munie desdits dispositifs d'espacement et de centrage, dans la conduite externe constituée de tubes assemblés par soudure, lesdits dispositifs en friction contre la paroi interne de la conduite externe, s'usent de façon non négligeable, en particulier au niveau des soudures qui s'étendent légèrement en saillie de ladite paroi interne. Afin de préserver ledit élément de l'abrasion qui est due, aux déplacements relatifs des deux tubes et dudit dispositif d'espacement et de centrage, elle est recouverte, au moins dans les surfaces de contact, d'une enveloppe en matériau plastique résistant avantageusement à l'abrasion, mais aussi aux agressions mécaniques et notamment aux chocs. Ce matériau plastique est par exemple du polyamide.

De manière préférentielle, ledit élément est formé de deux demi-pièces en arc, les extrémités libres des deux demi-pièces étant respectivement adaptées à être reliées ensemble par des moyens de liaison. De la sorte, le montage en est facilité puisqu'il suffit d'assembler les deux demi-pièces en ajustant respectivement leurs extrémités libres ensemble pour enserrer le tube interne en mettant en oeuvre lesdits moyens de liaison. Ces derniers sont par exemple formés en ménageant des perçages tangentiels dans les extrémités libres et en y introduisant des éléments vissables que l'on décrira plus en détail dans la suite de la description.

Selon un autre objet, la présente invention propose une conduite rigide à double enveloppe enroulable, comprenant une pluralité de dispositifs d'espacement et de centrage tels que décrits ci-dessus, espacés les uns des autres le long de ladite conduite rigide.

Ainsi, grâce auxdits dispositifs d'espacement et de centrage, ladite conduite rigide à double enveloppe est adaptée à être installée, notamment selon la technique dite du « rigide déroulé » sans que l'espace annulaire n'en soit déformé et donc en préservant les propriétés isolantes globales de la conduite.

Pour ce faire et de façon particulièrement avantageuse, les dispositifs d'espacement et de centrage sont espacés dans ledit espace annulaire d'une distance inférieure à cinq mètres ; et avantageusement l'espace annulaire est garni d'un matériau à faible conductivité thermique entre lesdits dispositifs d'espacement et de centrage.

En outre, grâce à la disposition des dispositifs d'espacement et de centrage le coefficient de transfert thermique moyen de ladite conduite est avantageusement inférieur à 11/10, préférentiellement 10,5/10, du coefficient de transfert thermique d'une portion de conduite dans l'annulaire de laquelle s'étend ledit matériau à faible conductivité thermique. Ainsi, ladite conduite est bien isolée thermiquement puisque les dispositifs d'espacement et de centrage conformes à l'invention, présentent des propriétés isolantes et confère à la conduite une isolation qui tend vers celle d'une conduite dont l'espace annulaire est entièrement rempli d'isolant, sans dispositif d'espacement et de centrage. De la sorte, les échanges thermiques entre l'intérieur de la conduite et l'extérieur sont faibles, contrairement aux conduites de l'art antérieur où les entretoises utilisées formaient des ponts thermiques entre l'intérieur et l'extérieur de la conduite.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique partielle en coupe longitudinale d'une conduite rigide à double enveloppe conforme à l'invention ;
- la Figure 2 est une vue schématique de détail en perspective d'un dispositif conforme à l'invention ;
- la Figure 3 est une vue schématique partielle en section de détail d'un élément du dispositif illustré sur la Figure 2 ;
- la Figure 4 est une vue schématique en section du dispositif illustré sur la Figure 2 après montage ;
- la Figure 5 est vue schématique en coupe d'un élément de dispositif selon un autre mode de mise en oeuvre ;
- la Figure 6 est une vue schématique en coupe d'un élément de dispositif selon encore un autre mode de mise en oeuvre ;
- la Figure 7 est une vue schématique partielle en coupe radiale montrant un dispositif conforme à l'invention selon une première variante d'exécution ;
- la Figure 8 est une vue schématique partielle en coupe radiale montrant un dispositif conforme à l'invention selon une deuxième variante d'exécution ;
- la Figure 9 est une vue schématique partielle en perspective d'un dispositif conforme à l'invention selon une troisième variante d'exécution ;
- la Figure 10 est une vue en coupe radiale du dispositif représenté sur la Figure 9 ;
- la Figure 11 est une vue schématique partielle en perspective d'un dispositif conforme à l'invention selon une quatrième variante d'exécution ; et,
- la Figure 12 est une vue en coupe radiale du dispositif représenté sur la Figure 11.

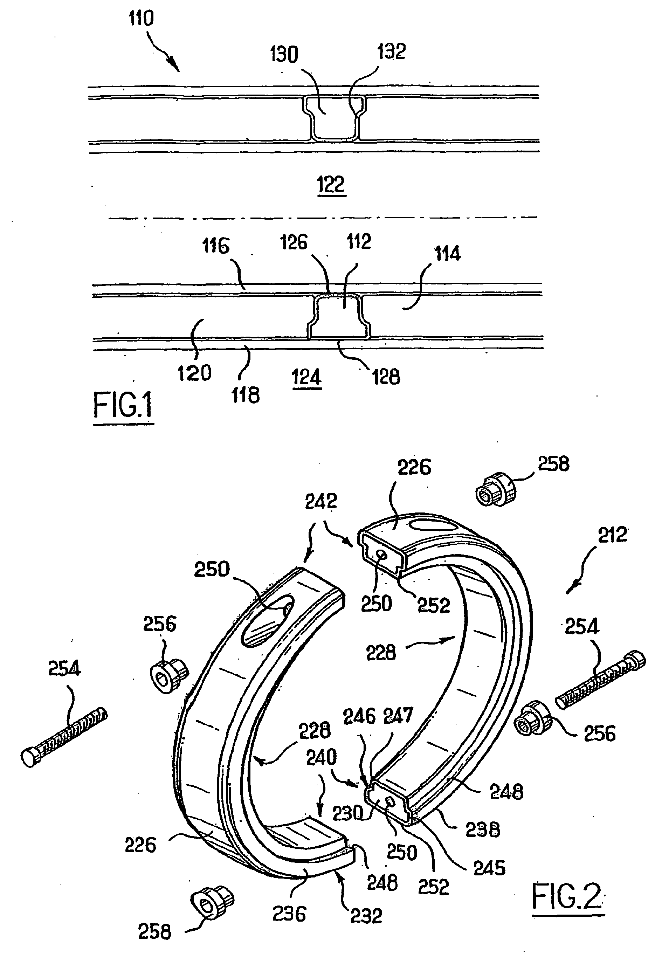

Les éléments similaires ou identiques qui remplissent la même fonction sur les Figures 1, 2, 5 et 6 présentent le même numéro précédé du numéro de la Figure considérée.

La Figure 1 illustre une portion de conduite rigide à double enveloppe 110, comportant un dispositif d'espacement et de centrage 112 conforme à l'invention, constitué d'une entretoise annulaire, qui est logée dans l'espace annulaire 114 entre deux tubes rigides coaxiaux, un tube externe 118 et un tube interne 116. En outre, l'espace annulaire 114 est rempli d'un matériau à faible conductivité thermique 120 adapté à isoler thermiquement l'intérieur 122 du tube interne 116 qui est destiné à véhiculer un fluide, par exemple des hydrocarbures. Cette isolation thermique est prévue, entre l'intérieur 122 et l'extérieur 124 afin que certains composés ne subissent pas de transformations physiques en refroidissant durant le transport le long de la conduite. Les paraffines, par exemple, sont susceptibles de figer en refroidissant et/ou les hydrates qui peuvent précipiter et conduire à l'obstruction de la conduite.

L'entretoise annulaire 112 est ici représentée en coupe, une surface externe 128 s'étend en regard du tube externe 118, préférentiellement espacée du tube externe, tandis qu'une surface interne 126 de l'entretoise annulaire 112 est en appui sur le tube interne 116 de façon à maintenir les deux tubes 116, 118 à distance l'un de l'autre. L'entretoise annulaire 112 est avantageusement montée en position fixe sur le tube interne 116 qui est ensuite inséré dans le tube externe 118, un jeu fonctionnel étant prévu entre l'entretoise annulaire 112 et le tube externe 118.

L'entretoise annulaire 112 comprend un élément 130 en forme de bague réalisé dans une matière à faible conductivité thermique et recouvert au moins partiellement d'une enveloppe 132 en matériau plastique.

L'élément 130 est réalisé dans un matériau à très hautes caractéristiques d'isolation thermique du type aérogel, organique ou inorganique et il est surmoulé d'un matériau plastique par exemple du polyamide, résistant à l'abrasion et aux différentes contraintes mécaniques tels les chocs, la compression ou le cisaillement.

Un aérogel, est réalisé à partir d'un gel qui a été séché pour évacuer son solvant et conserver la structure du solide telle qu'elle était établie dans le gel de départ. Le solvant a été remplacé par de l'air au cours du séchage et le gel initial forme alors un solide.

Ainsi, un aérogel de type inorganique, par exemple un aérogel de silice monolithique, présente une densité voisine de 0,1 g/cm³ et un pourcentage de solide voisin de 5 %.

L'aérogel rigide utilisé ici est par exemple inorganique, et sa conductivité thermique est inférieure à 0,1 W/m.K, par exemple 0,012 W/m.k.

En outre, malgré sa faible densité, sa résistance à la compression est importante, supérieure à 10 M.Pa, par exemple 100 M.Pa de sorte qu'après surmoulage, il est adapté à résister aux contraintes exercées par le rapprochement des deux tubes, 116, 118 lors de l'enroulage puis du déroulage de la conduite et plus particulièrement, il est adapté à transmettre les efforts radiaux de la conduite externe vers la conduite interne.

Grâce à sa conductivité thermique, qui est 10 fois ou 100 fois plus faible que celle des matières plastiques couramment utilisées pour réaliser des entretoises conformes à l'art antérieur, les pertes thermiques globales de la conduite 110 par le biais de l'entretoise annuaire 112 sont ainsi fortement atténuées, de l'ordre de 20 à 30%.

On décrira en référence à la Figure 2, un mode de solidarisation du dispositif conforme à l'invention, sur le tube interne et selon une forme particulière de l'entretoise annulaire.

L'entretoise annulaire 212 est constituée de deux demi-pièces en arc, 236, 238 symétriques l'une de l'autre, leur partie concave en regard de manière à pouvoir enserrer un tube interne. Les deux demi-pièces présentent respectivement deux extrémités libres 240, 242 aptes à être réunies par des moyens de liaison que l'on va décrire, pour former l'entretoise annulaire 212. Chacune des demi-pièces, 236, 238 comporte un élément 230 en forme de demi-bague et réalisé dans une matière à faible conductivité thermique, recouverte d'une enveloppe 232 en matériau plastique.

Les deux demi-pièces, en section radiale, présentent deux parties superposées, une partie externe 245 définissant une surface externe 226 et une partie interne 247, moins large, définissant une surface interne 228, les deux parties étant séparées par deux épaulements latéraux 246, 248 symétriques l'un de l'autre. Par ailleurs, chacune des extrémités libres 240, 242 des deux demi-pièces présente un perçage tangentiel 250, ménagé dans l'épaisseur des demi-pièces et débouchant d'un côté dans la surface externe 226, de l'autre côté dans la tranche 252 des sections radiales des demi-pièces. Ainsi, les perçages 250 des extrémités libres 240, 242, sont respectivement adaptés à coopérer ensemble, de façon que chaque paire de perçages puisse recevoir une vis 254 destinée à relier ensemble les extrémités libres 240, 242.

Les vis 254 sont destinées à coopérer, chacune avec un écrou 258 et une rondelle d'appui ou bague 256.

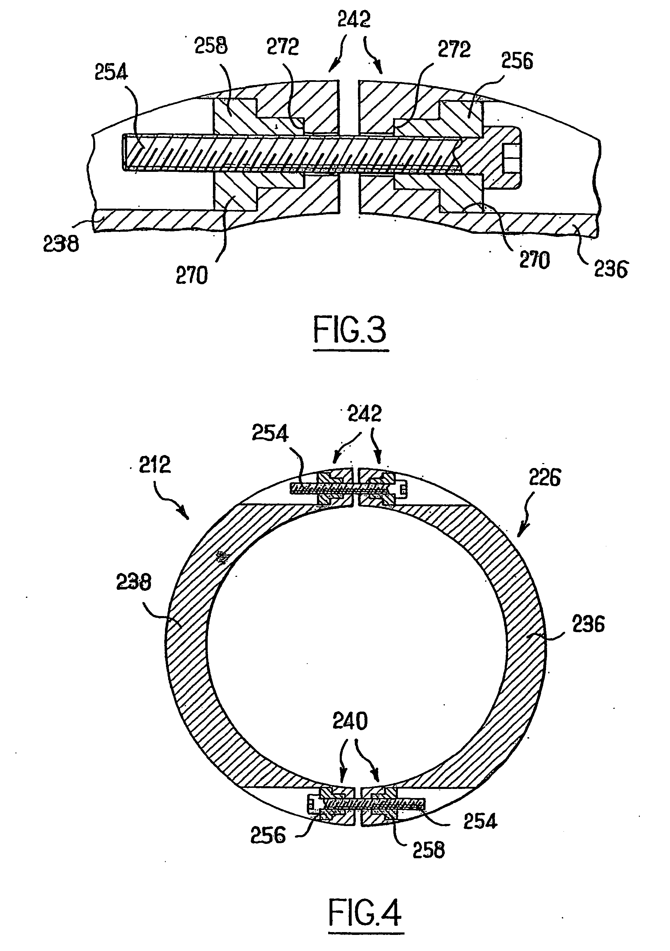

On retrouve sur la Figure 3 deux extrémités libres opposées 242 des deux demi-pièces 236, 238 assemblées et maintenues ensemble grâce à la vis 254 qui relie l'écrou 258 et la bague 256, lesquels entraînent les deux extrémités libres 242 des demi-pièces 236, 238. Afin de maintenir les deux paires d'extrémités libres ensemble, les perçages 250 des deux extrémités libres 242 présentent des épaulements internes 272 contre lesquels l'écrou 258 et la bague 256 viennent respectivement prendre appui.

Ainsi, on forme une structure rigide qui est enserrée sur le tube interne et simultanément on maintient en position fixe les deux demi-pièces 236, 238 l'une par rapport à l'autre, lesquelles sont à la fois bloquées radialement dans des directions opposées l'une par rapport à l'autre, mais aussi longitudinalement.

Ce type de liaison, permet de maintenir l'entretoise annulaire 212 que l'on retrouve intégralement sur la Figure 4, en position fixe sur le tube interne, les deux autres extrémités libres 240 respectives des deux demi-pièces 236, 238 étant reliées ensemble symétriquement de la même façon.

En outre, la vis 254 qui est adaptée à être entraînée en rotation grâce à une tête à empreinte, est entièrement logée dans l'épaisseur de l'entretoise annulaire 212 afin de ne pas gêner l'appui de la surface externe 226 contre le tube externe.

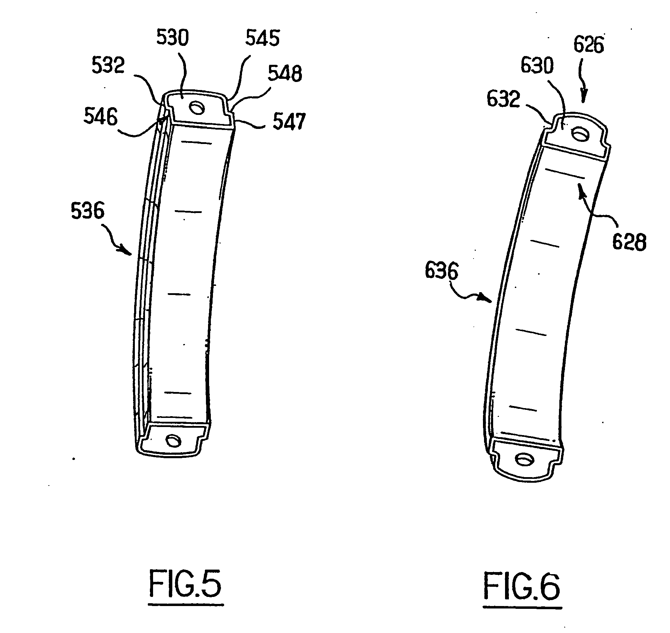

La Figure 6 illustre une demi-pièce 636 en forme d'arc destinée à être appariée pour former une entretoise annulaire selon un autre mode de mise en oeuvre ; la section radiale de la demi-pièce 636 est sensiblement identique à celle de la section radiale de l'entretoise annulaire illustrée sur la Figure 1.

Contrairement, à l'entretoise annulaire représentée sur la Figure 2, la surface externe 626 est moins large que la surface interne 628, ce qui permet d'obtenir une entretoise annulaire dont les forces de frottement contre le tube interne sont supérieures aux forces de frottement contre le tube externe.

Selon encore un autre mode de mise en oeuvre, illustré sur la Figure 5 où l'on retrouve également une demi-pièce 536 en forme d'arc, la section radiale n'est plus symétrique mais dissymétrique. Les parties externes 545 et interne 547, qui sont ici sensiblement de même largeurs, sont décalées longitudinalement l'une par rapport à l'autre de façon à former deux épaulements 546, 548 dont les surfaces d'appui sont opposées l'une de l'autre. L'une 548 est destinée à venir en regard du tube externe et l'autre, 546 en regard du tube interne.

Dans ces deux modes de mise en oeuvre, illustrés sur les Figures 5 et 6, conformément à l'invention, les demi-pièces 536, 636 présentent respectivement un élément 530, 630 en forme de demi-bague et réalisée dans une matière à faible conductivité thermique, recouverte d'une enveloppe 532, 632 en matériau plastique.

La réalisation du dispositif conforme à l'invention, dans tous les modes de mise en oeuvre décrit ci-dessus, est susceptible d'être réalisé en surmoulant l'aérogel avec le matériau plastique pour le recouvrir partiellement ou entièrement. Par ailleurs, les écrous et les rondelles d'appui ou bague, sont adaptés à être surmoulés avec l'aérogel de façon à simplifier le montage.

Toutefois, selon un mode particulier de mise en oeuvre de l'invention, seules les surfaces interne et externe sont surmoulées avec le matériau plastique, les flancs du dispositif laissant apparaître l'aérogel, restant libres. On obtient ainsi, un dispositif dont les parois forment une structure sandwich.

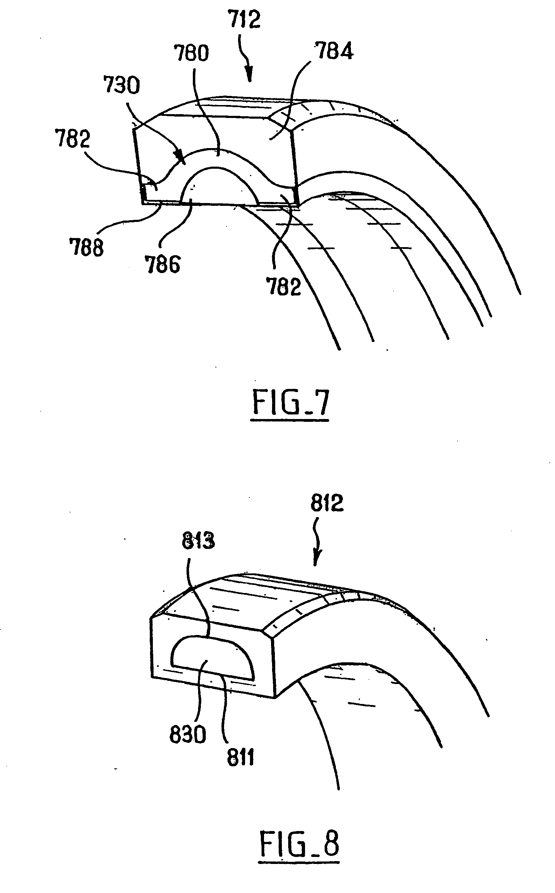

On décrira maintenant, en référence aux Figures 7 à 12 un dispositif d'espacement et de centrage conforme à l'invention selon quatre variantes d'exécutions différentes.

Sur la Figure 7 on retrouve en coupe radiale, une entretoise annulaire 712 contenant un élément 730 constitué d'un aérogel rigide. En section, l'élément 730 présente un arc 780 prolongé à chaque extrémité par deux portions coaxiales 782 s'écartant l'une de l'autre. En outre, l'élément 730 en aérogel est situé entre deux parties en polyamide 784 et 786. Compte tenu de la fragilité de l'aérogel, l'élément 730 est protégé dans sa partie inférieure par une couche 788, rapportée ou surmoulée en polyamide.

Selon une deuxième variante, représentée sur la Figure 8, une entretoise annulaire 812, comporte à l'intérieur, noyé dans le polyamide qui l'entoure, un élément 830 en aérogel rigide qui en section présente un côté rectiligne 811, orienté vers l'intérieur de l'entretoise 812 et une partie arrondie 813, orientée vers l'extérieur. L'élément 830 s'étend sensiblement sur la largeur de l'entretoise 812.

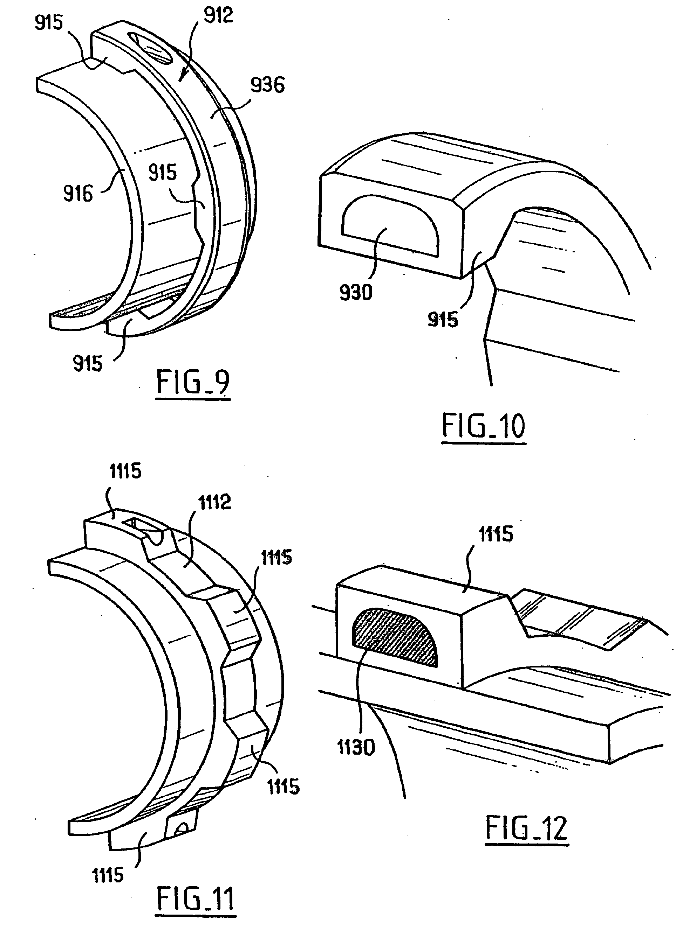

On a représenté sur la Figure 9, une demi-pièce en arc 936 d'une entretoise 912, maintenue sur un tube interne 916 selon une troisième variante de réalisation de l'invention. L'entretoise annulaire présente des premiers créneaux 915 en appui contre le tube interne 916 et qui contiennent un élément en aérogel 930 que l'on trouve illustré en coupe sur la Figure 10.

Entre les créneaux 915 l'entretoise annulaire 912 est maintenue à distance du tube interne 916 pour ne pas conduire l'énergie thermique et de façon avantageuse, un autre matériau isolant est inséré entre le tube 916 et l'entretoise 912.

Selon une quatrième variante illustrée sur les Figures 11 et 12, les créneaux 1115 de l'entretoise 1112 sont orientés vers l'extérieur et ils contiennent un élément en aérogel 1130 illustré en coupe sur la Figure 12. Selon cette variante, l'entretoise, entre les créneaux, est espacée d'un tube externe non représenté et ce sont les créneaux qui prennent appui contre ce tube externe. Tout comme dans la variante précédente, l'espace entre le tube externe et l'entretoise est susceptible d'être comblé par un autre matériau isolant.

## Revendications

1. Dispositif d'espacement et de centrage pour conduite rigide à double enveloppe (110), de type enroulable, destinée au transport des hydrocarbures, ladite conduite rigide (110) comprenant deux tubes coaxiaux, un tube interne (116) et un tube externe (118) séparés par un espace annulaire (114), ledit dispositif d'espacement et de centrage étant logé dans ledit espace annulaire (114), ledit dispositif d'espacement et de centrage étant constitué d'une entretoise annulaire rigide en forme de bague présentant une surface externe (128) et une surface interne (126), ladite surface interne (126) venant en appui sur ledit tube interne (116), tandis que ladite surface externe (126) vient en appui contre le tube externe pour maintenir les deux tubes coaxiaux (116, 118) à distance l'un de l'autre ;
**caractérisé en ce que** ladite entretoise annulaire rigide comporte un élément (130) en forme de bague en matière à faible conductivité thermique constituée d'un aérogel rigide, ledit élément en forme de bague étant surmoulé d'un matériau plastique, le surmoulage formant lesdites surfaces interne (126) et externe (128), ledit élément en forme de bague surmoulé ayant une résistance à la compression supérieure à 10 MPa et étant adapté à résister aux contraintes exercées par le rapprochement desdits tubes coaxiaux (116, 118), lorsque ladite conduite rigide est enroulée puis déroulée.

2. Dispositif d'espacement et de centrage selon la revendication 1, **caractérisé en ce que** ledit aérogel est à base inorganique.

3. Dispositif d'espacement et de centrage selon la revendication 1 ou 2, **caractérisé en ce que** ledit élément (130) est formé de deux demi-pièces (236, 238) en arc, les extrémités libres (240, 242) des deux demi-pièces (236, 238) étant respectivement adaptées à être reliées ensemble par des moyens de liaison (254, 256, 258).

4. Dispositif d'espacement et de centrage selon l'une quelconque des revendications 1 à 3, **caractérisé en ce que** ledit matériau plastique est un matériau résistant notamment à l'abrasion.

5. Conduite rigide à double enveloppe enroulable, **caractérisée en ce qu'**elle comprend une pluralité de dispositifs d'espacement et de centrage selon l'une quelconque des revendications 1 à 4, espacés les uns des autres le long de ladite conduite rigide (110).

6. Conduite rigide selon la revendication 5, **caractérisée en ce que** ledit espace annulaire (114) comprend un matériau à faible conductivité thermique entre lesdits dispositifs d'espacement et de centrage.

7. Conduite rigide selon la revendication 5 ou 6, **caractérisée en ce que** les dispositifs d'espacement et de centrage sont espacés d'une distance inférieure à 5 mètres.

8. Conduite rigide selon l'une quelconque des revendications 5 à 7, **caractérisée en ce que** son coefficient de transfert thermique moyen est inférieur à onze dixièmes du coefficient de transfert thermique d'une portion de conduite dans l'annulaire de laquelle s'étend ledit matériau à faible conductivité thermique.

## Claims

1. A spacing and centering device for a rigid pipe-in-pipe (110), of the type which can be wound up, intended for the transport of hydrocarbons, said rigid pipe (110) comprising two coaxial tubes, one inner tube (116) and one outer tube (118) which are separated by an annular space (114), said spacing and centering device being accommodated in said annular space (114), said spacing and centering device consisting in a ring-shaped rigid annular spacer, with an outer surface (128) and an inner surface (126), said inner surface (126) abutting said inner tube (116) and said outer (surface (126) abutting said outer tube in order to hold the two coaxial tubes (116, 118) at a distance from one another, **characterized in that** said rigid annular spacer comprises a ring-shaped element (130) made of material with low heat conductivity consisting of a rigid aerogel, said ring-shaped element being overmoulded with plastic material, the overmoulding forming said inner (126) and outer (128 surfaces, said overmoulded ring-shaped element having compression strength greater than 10MPa and being adapted to resist the stresses induced by the coaxial tubes (116, 118) coming closer to one another when the rigid pipe is reeled and then unreeled.

2. The spacing and centering device as claimed in claim 1, **characterized in that** said aerogel has an inorganic base.

3. The spacing and centering device as claimed in claim 1 or 2, **characterized in that** said element (130) is formed from two arc-shaped half-pieces (236, 238), the free ends (240, 242) of the two half-pieces (236, 238) being respectively adapted to be connected together by connection means (254, 256, 258).

4. The spacing and centering device as claimed in any one of claims 1 to 3, **characterized in that** said plastic material is a material which is resistant in particular to abrasion.

5. A rigid pipe-in-pipe which can be wound up, **characterized in that** it comprises a plurality of spacing and centering devices as claimed in any one of claims 1 to 4, which are spaced from one another along said rigid pipe (110).

6. The rigid pipe as claimed in claim 5, **characterized in that** said annular space (114) comprises a material with low heat conductivity between said spacing and centering devices.

7. The rigid pipe as claimed in claim 5 or 6, **characterized in that** the spacing and centering devices are spaced by a distance of less than 5 meters.

8. The rigid pipe as claimed in any one of claims 5 to 7, **characterized in that** its average heat transfer coefficient is less than eleven tenths of the heat transfer coefficient of a portion of pipe in the annulus of which said material with low heat conductivity extends.

## Patentansprüche

1. Beabstandungs- und Zentriervorrichtung für eine starre doppelwandige Rohrleitung (110) vom aufwickelbaren Typ zum Transport von Kohlenwasserstoff, wobei die starre Rohrleitung (110) zwei koaxiale Rohre, ein inneres Rohr (116) und ein äußeres Rohr (118), die durch einen ringförmigen Raum (114) voneinander getrennt sind, aufweist, wobei die Beabstandungs- und Zentriervorrichtung in dem ringförmigen Raum (114) gelagert ist, wobei die Beabstandungs- und Zentriervorrichtung aus einem starren ringförmigen Steg bzw. einer starren ringförmigen Abstandshülse in Ringform gebildet ist, der bzw. die eine Außenfläche (128) und eine Innenfläche (126) aufweist, wobei die Innenfläche (126) mit dem inneren Rohr (116) in Anlage kommt, während die Außenfläche (126) mit dem äußeren Rohr in Anlage kommt, um die beiden koaxialen Rohre (116, 118) in einem Abstand zueinander zu halten;
**dadurch gekennzeichnet, dass** der starre ringförmige Steg ein Element (130) in Ringform aus einem Material mit einer geringen spezifischen Wärmeleitfähigkeit, das aus einem starren Aerogel gebildet ist, aufweist, wobei das Element in Ringform aus einem Kunststoffmaterial ausgegossen ist, wobei die Form nach einem Gußstück die Innen- und Außenfläche (126, 128) bildet, wobei das ausgegossene Element in Ringform eine Druckfestigkeit über 10 MPa aufweist und dafür geeignet ist, den durch die Annäherung der koaxialen Rohre (116, 118) ausgeübten Belastungen standzuhalten, wenn die starre Rohrleitung aufgewickelt und dann abgewickelt wird.

2. Beabstandungs- und Zentriervorrichtung nach Anspruch 1**, dadurch gekennzeichnet, dass** das Aeorgel ein Aerogel auf anorganischer Basis ist.

3. Beabstandungs- und Zentriervorrichtung nach Anspruch 1 oder 2, **dadurch gekennzeichnet, dass** das Element (130) aus zwei bogenförmigen Halbstücken (236, 238) gebildet ist, wobei die freien Enden (240, 242) der beiden Halbstücke (236, 238) jeweils dazu geeignet sind, durch Verbindungsmittel (254, 256, 258) miteinander verbunden zu werden.

4. Beabstandungs- und Zentriervorrichtung nach einem der Ansprüche 1 bis 3, **dadurch gekennzeichnet, dass** das Kunststoffmaterial ein Material ist, das insbesondere abriebfest ist.

5. Starre doppelwandige aufwickelbare Rohrleitung, **dadurch gekennzeichnet, dass** sie eine Vielzahl von Beabstandungs- und Zentriervorrichtungen nach einem der Ansprüche 1 bis 4 aufweist, die entlang der starren Rohrleitung (110) voneinander beabstandet sind.

6. Starre Rohrleitung nach Anspruch 5, **dadurch gekennzeichnet, dass** der ringförmige Raum (114) ein Material mit einer geringen spezifischen Wärmeleitfähigkeit zwischen der Beabstandungs- und der Zentriervorrichtung aufweist.

7. Starre Rohrleitung nach Anspruch 5 oder 6, **dadurch gekennzeichnet, dass** die Beabstandungs- und Zentriervorrichtungen um einen Abstand von weniger als 5 Metern beabstandet sind.

8. Starre Rohrleitung nach einem der Ansprüche 5 bis 7, **dadurch gekennzeichnet, dass** ihr mittlerer Wärmeübertragungskoeffizient weniger als elf Zehntel des Wärmeübertragungskoeffizienten eines Rohrleitungsabschnitts in der Ringform beträgt, von dem sich das Material mit geringer spezifischer Wärmeleitfähigkeit erstreckt.
